(19) **Europäisches Patentamt**
**European Patent Office**
**Office européen des brevets**

(11) **EP 4 412 308 A1**

(12) **EUROPEAN PATENT APPLICATION**

(43) Date of publication:
**07.08.2024 Bulletin 2024/32**

(51) International Patent Classification (IPC):
***H04W 36/00*** (2009.01)

(21) Application number: **24154664.7**

(22) Date of filing: **30.01.2024**

(52) Cooperative Patent Classification (CPC):
**H04W 36/0069**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.02.2023 FI 20235105**

(71) Applicant: **Nokia Technologies Oy
02610 Espoo (FI)**

(72) Inventors:
• **ZHANG, Xin
Taufkirchen (DE)**
• **KARABULUT, Umur
Munich (DE)**
• **GÜRSU, Halit Murat
München (DE)**

(74) Representative: **Nokia EPO representatives
Nokia Technologies Oy
Karakaari 7
02610 Espoo (FI)**

(54) **METHOD, APPARATUS AND COMPUTER PROGRAM**

(57) A master node apparatus comprising: means for connecting to a user equipment and at least one secondary node in a multi-connectivity network; means for sending a message comprising an information element to the user equipment, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

Fig. 4

**Description**

FIELD

The present application relates to a method, apparatus, system and computer program.

BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite-based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

SUMMARY

According to a first aspect, there is provided a master node apparatus comprising: means for connecting to a user equipment and at least one secondary node in a multi-connectivity network; means for sending a message comprising an information element to the user equipment, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

According to some examples, the multi-connectivity network comprises a dual connectivity network.

According to some examples, the information element indicates that the primary cell connected to the master node apparatus should be used as a special cell for determining the cell change execution condition for the target primary secondary cell when the information element is empty.

According to some examples, the identifier comprises a physical cell identifier.

According to some examples, the means for sending the message comprising the information element sends the information when capability signalling has been received from the user equipment.

According to some examples, the cell change execution condition comprises an A3 event condition or an A5 event condition.

According to some examples, the message comprises a Radio Resource Configuration reconfiguration message.

According to some examples, a determination of an A3 event condition comprises a determination of whether a power measurement result of the target primary secondary cell is greater by a first predetermined value than a power measurement result of the special cell.

According to some examples, a determination of an A3 event condition comprises a determination of whether a power measurement result of the target primary secondary cell is lesser by a second predetermined value than a power measurement result of the special cell.

According to some examples, a determination of an A5 event condition comprises a determination of whether a power measurement result of the special cell is lesser than a first threshold value and that a power measurement result of the target primary secondary cell is greater than a second threshold value.

According to some examples, a determination of an A5 event condition comprises a determination of whether a power measurement result of the special cell is greater than a third threshold value and that a power measurement result of a target primary secondary cell is lesser than a fourth threshold value.

According to a second aspect, there is provided a method performed by a master node apparatus comprising: connecting to a user equipment and at least one secondary node in a multi-connectivity network; sending a message comprising an information element to the user equipment, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

According to some examples, the multi-connectivity network comprises a dual connectivity network.

According to some examples, the information element indicates that the primary cell connected to the master node apparatus should be used as a special cell for determining the cell change execution condition for the target primary secondary cell when the information element is empty.

According to some examples, the identifier comprises a physical cell identifier.

According to some examples, sending the message comprising the information element comprises sending the information when capability signalling has been received from the user equipment.

According to some examples, the cell change execution condition comprises an A3 event condition or an A5 event condition.

According to some examples, the message comprises a Radio Resource Configuration reconfiguration message.

According to some examples, a determination of an A3 event condition comprises a determination of whether a power measurement result of the target primary secondary cell is greater by a first predetermined value than a power measurement result of the special cell.

According to some examples, a determination of an A3 event condition comprises a determination of whether a power measurement result of the target primary secondary cell is lesser by a second predetermined value than a power measurement result of the special cell.

According to some examples, a determination of an A5 event condition comprises a determination of whether a power measurement result of the special cell is lesser than a first threshold value and that a power measurement result of the target primary secondary cell is greater than a second threshold value.

According to some examples, a determination of an A5 event condition comprises a determination of whether a power measurement result of the special cell is greater than a third threshold value and that a power measurement result of a target primary secondary cell is lesser than a fourth threshold value.

According to a third aspect, there is provided a master node apparatus comprising at least one processor and at least one memory storing instructions that, when executed by the at least one processor, cause the apparatus at least to: connecting to a user equipment and at least one secondary node in a multi-connectivity network; sending a message comprising an information element to the user equipment, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

According to a fourth aspect there is provided a master node apparatus comprising: circuitry for: connecting to a user equipment and at least one secondary node in a multi-connectivity network; sending a message comprising an information element to the user equipment, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

According to a fifth aspect there is provided a computer program comprising instructions for causing a master node apparatus to perform at least the following: connecting to a user equipment and at least one secondary node in a multi-connectivity network; sending a message comprising an information element to the user equipment, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

According to a sixth aspect there is provided a computer program comprising instructions stored thereon for performing at least the following: connecting to a user equipment and at least one secondary node in a multi-connectivity network; sending a message comprising an information element to the user equipment, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

According to a seventh aspect there is provided a non-transitory computer readable medium comprising program instructions for causing a master node apparatus to perform at least the following: connecting to a user equipment and at least one secondary node in a multi-connectivity network; sending a message comprising an information element to the user equipment, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

According to an eighth aspect there is provided a non-transitory computer readable medium comprising program instructions stored thereon for performing at least the following: connecting to a user equipment and at least one secondary node in a multi-connectivity network; sending a message comprising an information element to the user equipment, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

According to a ninth aspect there is provided an apparatus comprising: means for connecting to a master node and at least one secondary node in a multi-connectivity network; means for receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell; and wherein the apparatus comprises: means for determining the cell change execution condition using the special cell According to some examples, the apparatus comprises a UE apparatus.

According to some examples, the multi-connectivity network comprises a dual connectivity network.

According to some examples, the information element indicates that the primary cell connected to the master node apparatus should be used as a special cell for determining the cell change execution condition for the target primary secondary cell when the information element is empty.

According to some examples, the identifier comprises a physical cell identifier.

According to some examples, the apparatus comprises means for sending information indicating capability signalling for interpreting the information element.

According to some examples, the cell change execution condition comprises an A3 event condition or an A5 event condition.

According to some examples, the message comprises a Radio Resource Configuration reconfiguration message.

According to some examples, a determination of an A3 event condition comprises a determination of whether a power measurement result of the target primary secondary cell is greater by a first predetermined value than a power measurement result of the special cell.

According to some examples, a determination of an A3 event condition comprises a determination of whether a power measurement result of the target primary secondary cell is lesser by a second predetermined value than a power measurement result of the special cell.

According to some examples, a determination of an A5 event condition comprises a determination of whether a power measurement result of the special cell is lesser than a first threshold value and that a power measurement result of the target primary secondary cell is greater than a second threshold value.

According to some examples, a determination of an A5 event condition comprises a determination of whether a power measurement result of the special cell is greater than a third threshold value and that a power measurement result of a target primary secondary cell is lesser than a fourth threshold value.

According to a tenth aspect there is provided a method comprising: connecting to a master node and at least one secondary node in a multi-connectivity network; receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell; and wherein the method comprises: determining the cell change execution condition using the special cell.

According to some examples, the method is performed by a UE apparatus.

According to some examples, the multi-connectivity network comprises a dual connectivity network.

According to some examples, the information element indicates that the primary cell connected to the master node apparatus should be used as a special cell for determining the cell change execution condition for the target primary secondary cell when the information element is empty.

According to some examples, the identifier comprises a physical cell identifier.

According to some examples, the method comprises sending information indicating capability signalling for interpreting the information element.

According to some examples, the cell change execution condition comprises an A3 event condition or an A5 event condition.

According to some examples, the message comprises a Radio Resource Configuration reconfiguration message.

According to some examples, a determination of an A3 event condition comprises a determination of whether a power measurement result of the target primary secondary cell is greater by a first predetermined value than a power measurement result of the special cell.

According to some examples, a determination of an A3 event condition comprises a determination of whether a power measurement result of the target primary secondary cell is lesser by a second predetermined value than a power measurement result of the special cell.

According to some examples, a determination of an A5 event condition comprises a determination of whether a power measurement result of the special cell is lesser than a first threshold value and that a power measurement result of the target primary secondary cell is greater than a second threshold value.

According to some examples, a determination of an A5 event condition comprises a determination of whether a power measurement result of the special cell is greater than a third threshold value and that a power measurement result of a target primary secondary cell is lesser than a fourth threshold value.

According to a eleventh aspect there is provided an apparatus comprising: at least one processor; and at least one memory including computer program code; the at least one memory and the computer program code configured to, with the at least one processor, cause the apparatus at least to perform: connecting to a master node and at least one secondary node in a multi-connectivity network; receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell; and wherein the method comprises: determining the cell change execution condition using the special cell.

According to a twelfth aspect there is provided an apparatus comprising circuitry for: connecting to a master node and at least one secondary node in a multi-connectivity network; receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell; and wherein the method comprises: determining the cell change execution condition using the special cell.

According to a thirteenth aspect there is provided a computer program comprising instructions for causing an apparatus to perform at least the following: connecting to a master node and at least one secondary node in a multi-connectivity network; receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell; and wherein the method comprises: determining the cell change execution condition using the special cell.

According to a fourteenth aspect there is provided a computer program comprising instructions stored thereon for performing at least the following: connecting to a master node and at least one secondary node in a multi-connectivity network; receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell; and wherein the method comprises: determining the cell change execution condition using the special cell.

According to a fifteenth aspect there is provided a non-transitory computer readable medium comprising program instructions for causing an apparatus to perform at least the following: connecting to a master node and at least one secondary node in a multi-connectivity network; receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell; and wherein the method comprises: determining the cell change execution condition using the special cell.

According to a sixteenth aspect there is provided a non-transitory computer readable medium comprising program instructions stored thereon for performing at least the following: connecting to a master node and at least one secondary node in a multi-connectivity network; receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell; and wherein the method comprises: determining the cell change execution condition using the special cell.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

DESCRIPTION OF FIGURES

Embodiments will now be described, by way of example only, with reference to the accompanying Figures in which:

Figure 1 shows a representation of a network system according to some example embodiments;
Figure 2 shows an example of a network system according to some example embodiments;
Figure 3 shows an example of a New Radio (NR) Multi-Connectivity (MC) network;
Figure 4 shows an example of a message flow;
Figure 5 shows an example of an information element;
Figure 6 shows a representation of a control apparatus according to some example embodiments;
Figure 7 shows a representation of an apparatus according to some example embodiments;
Figure 8 shows a method flow diagram;
Figure 9 shows a method flow diagram;
Figure 10 shows a schematic representation of a non-volatile memory medium storing instructions which when executed by a processor allow a processor to perform one or more of the steps of the method of Figure 4.

DETAILED DESCRIPTION

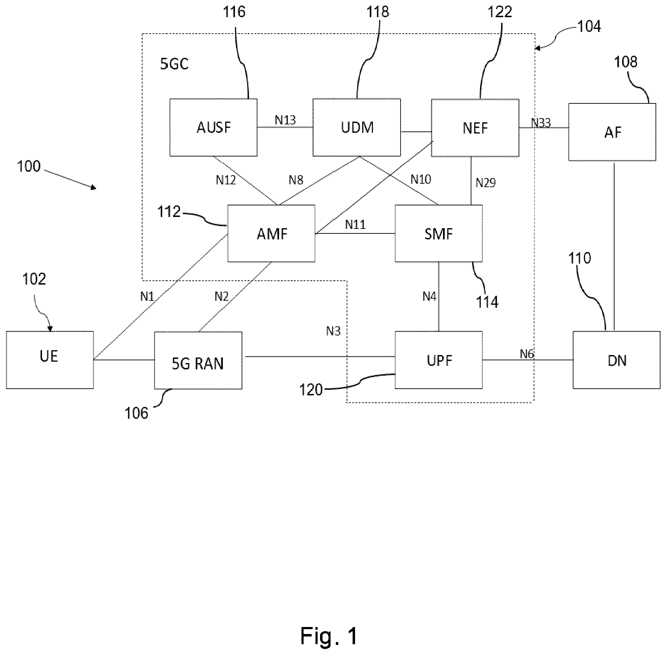

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figure 1 to assist in understanding the technology underlying the described examples.

Figure 1 shows a schematic representation of a 5G system (5GS) 100. 5GS 100 may be comprised by a terminal or user equipment (UE) 102, a 5G radio access network (5GRAN) 106 or next generation radio access network (NG-RAN), a 5G core network (5GC) 104, at least one application function (AF) 108 and at least one data network (DN) 110.

5G-RAN 106 may comprise one or more gNodeB (GNB) or one or more gNodeB (GNB) distributed unit functions connected to one or more gNodeB (GNB) centralized unit functions. 5GC 104 may comprise the following entities:

Network Slice Selection Function (NSSF); Network Exposure Function (NEF) 122; Network Repository Function (NRF); Policy Control Function (PCF); Unified Data Management (UDM) 118; Application Function (AF); Authentication Server Function (AUSF) 116; an Access and Mobility Management Function (AMF) 112; and Session Management Function (SMF) 114.

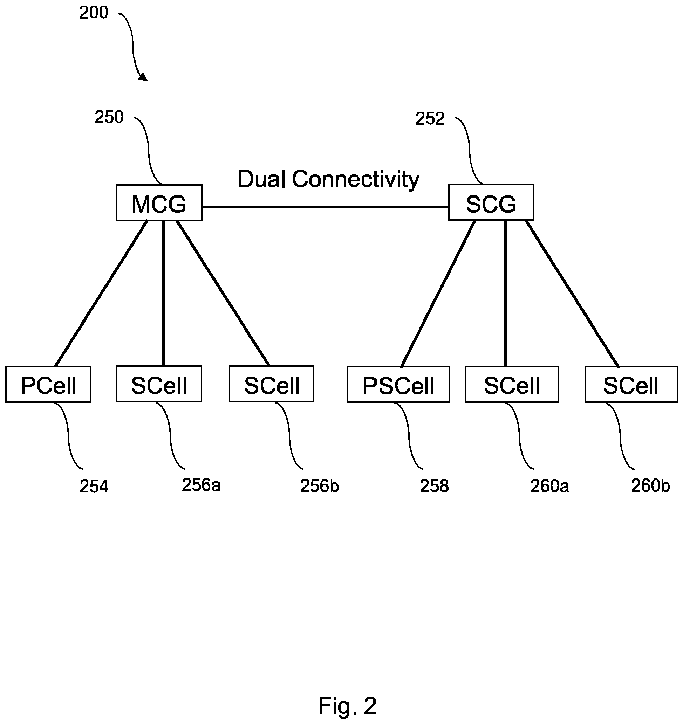

Figure 2 shows a system 200 in which some examples may be performed. System 200 comprises Master Cell Group (MCG) 250 and a Secondary Cell Group (SCG) 252. System 200 may also comprise other SCGs, each having a PSCell. Each of the of other SCGs may also have one or more SCells.

MCG 250 comprises a Primary Cell (PCell) 254. PCell 254 may be used to initiate initial access for a UE. MCG 250 may also comprise other cells comprising at least one Secondary Cell (SCell) 256a and 256b.

MCG 250 may be controlled by a Master Node (MN).

MCG 250 is connected to SCG 252 by a Dual Connectivity (DC) system. SCG 252 comprises a Primary Secondary Cell (PSCell) 258 which may be used as a cell for which initial access is initiated for SCG 252. SCG 252 may also comprise other cells comprising at least one Secondary Cell (SCell) 260a and 260b.

SCG 252 may be controlled by a Secondary Node (SN). Each SCG in system 200 may comprise a SN.

Table 1 describes comparison criteria for high level mobility of UEs. These criteria can be applied in Multi Connectivity (MC) or DC networks.

| Event | Criteria |
|---|---|
| A1 | Serving becomes better than threshold |
| A2 | Serving becomes worse than threshold |
| A3 | Neighbour becomes offset better than SpCell |
| A4 | Neighbour becomes better than threshold |
| A5 | SpCell becomes worse than threshold1 and neighbour becomes better than threshold2 |
| A6 | Neighbour becomes offset better than SCell |
| **Table 1:** Event criteria for high level mobility | |

A "Neighbour" as mentioned in Table 1 may comprise a target secondary node (T-SN). An SpCell is a "Special Cell" in which an initial access can be performed and/or Physical Uplink Control Channel (PUCCH) is scheduled. An SpCell could comprise a PCell in an MCG, or could be a PSCell in a SCG. For example, an SpCell could comprise PCell 254 in MCG 250, or PSCell 258 in SCG 252. As a result, the SpCell that is indicated in an A3 or A5 evaluation procedure described above in Table 1 can be either a PCell of an MN or PSCell of a SN.

The determination whether an SpCell is a PCell or a PSCell is described in 3GPP TS38.331 5.5.1 (Measurements Introduction). The measurement procedure of 3GPP TS38.331 5.5.1 distinguishes the following types of cells:

1. The NR serving cell(s) - these are the SpCell and one or more SCells.
2. Listed cells - these are cells listed within the measurement object(s).
3. Detected cells - these are cells that are not listed within the measurement object(s) but are detected by the UE on the Synchronization Signal Block (SSB) frequency(ies) and subcarrier spacing(s) indicated by the measurement object(s).

3GPP TS38.331 5.5.1 further states that in NR-DC, a UE may receive two independent information elements (IEs):

- A "measConfig" IE may be associated with an MCG (e.g., MCG 250). Such an IE may be included in a Radio Resource Control (RRC) reconfiguration message (e.g., RRCReconfiguration message). The IE may be received by the UE via SRB1 (Signal Radio Bearer 1)
- A measConfig IE may associated with a SCG (e.g., SCG 252). Such an IE may be included in an RRC reconfiguration message (e.g., RRCReconfiguration message). The RRC reconfiguration message may be received via SRB3, or, alternatively, included within a *RRCReconfiguration* message embedded in a *RRCReconfiguration* message received via SRB1

In this case, the UE maintains two independent configuration (VarMeasConfig) and list of reporting entries (VarMeasReportList), one associated with each measConfig IE, and the UE independently performs all the procedures in clause 5.5 of 3GPP TS38.331 for each measConfig IE and the associated VarMeasConfig and VarMeasReportList, unless explicitly stated otherwise.

As such, and as defined in in 3GPP TS38.331 5.5.1, in a MN-initiated scenario, the serving cell associated to a measConfig IE will be the serving cell in MCG 250, which will be PCell 254. In an SN-initiated scenario, the serving cell associated to a measConfig IE is the serving cell in SCG 252, which will be PSCell 258.

In the context of inter-SN Conditional PSCell Change (CPC), it is determined if a change of PSCell is necessary for better network conditions. In a normal or conditional A3 or A5 event for inter-SN CPC, it is therefore useful to compare a source PSCell and a target PSCell. A cell change execution condition may comprise an A3 or A5 event condition.

In an MN-initiated inter-SN CPC scenario, the intention is to compare a serving PSCell power against a neighbour cell power value, or a threshold power value. However based on the SpCell determination procedure described in 3GPP TS38.331 5.5.1 (Measurements Introduction) and detailed above, if a MN configures a normal or conditional A3 or A5 event for CPC execution, the triggering criteria will be comparing measurements between the source PCell and the target PSCell. The CPC procedure will not work as expected, because when an MN configures an A3 or A5 event as the triggering condition for CPC, the UE will associate the SpCell with PCell 254 instead of PSCell 258 if the configuration is received from MN. Comparison for the A3 or A5 event will fail because the serving cell associated to the measConfig is the PCell. This will lead to the comparison not being valid for CPC.

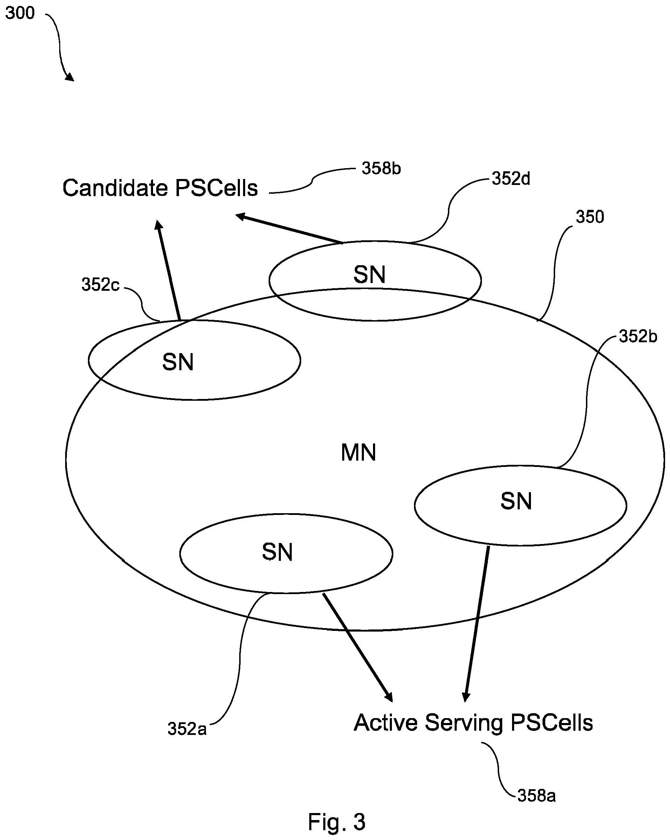

An example multi-connectivity (MC) network 300 is shown in Figure 3. In an MC network 300, there can be more than one SN 352a, 352b acting as an active serving PSCells 358a. There may also be candidate PSCells 358b such as SN 352c, 352d. According to some examples, MC network 300 may comprise a Release 19 (Rel19) network, or later.

According to some examples, MN 350 in MC network 300 may prepare to add SN352c and 358b as candidate PSCells 358b to MC network 300. An A3 or A5 event may be configured as a triggering event for the candidate PSCells 358b by MN 350.

In MC network 350, there are two ambiguities for normal or conditional cell changes (e.g., A3 or A5 events). One ambiguity is that a PSCell such as PSCell 358a, 358b should be the compared cell (SpCell) in the normal or conditional A3/A5 event rather than PCell 254. The second ambiguity regards determining which PSCell is the compared cell. For example, if MN 350 wants to compare the serving PSCell1 (not shown in Figure 3) of SN 352a against a target PSCell of SN 352c or of SN 352d, the UE needs to be instructed that serving PSCell1 of SN 352a needs to be used for evaluation of a normal or conditional A3/A5 event, not a serving PSCell2 (not shown in Figure 3) of SN 352b.

According to some examples, an IE is sent from a MN to a UE to instruct the UE to use either a source PSCell or a PCell as an SpCell when a MN configures a cell change execution condition for a target PSCell. According to some examples, a data field is included in an IE for instructing the UE to use either a source PSCell or a PCell as an SpCell. The data field may comprise an RRC field. According to some examples, the cell change execution condition may comprise an A3 or A5 event condition. The A3 or A5 event condition may be normal or conditional. The IE can be sent in an MN-initiated inter-SN scenario.

According to some examples, the IE sent to the UE to instruct the UE to associate a source PSCell or a PCell with an SpCell comprises a ReportConfigNR. The ReportConfigNR may comprise an RRC field for instructing the UE to associate a source PSCell or a PCell with an SpCell comprises a ReportConfigNR.

When the UE receives a message (e.g., an RRC reconfiguration message) comprising the IE, the UE will check if the field is filled with an identifier (e.g., a Physical Cell ID, PCI) or is empty.

If an identifier is present in the IE, the UE will look for a measurement object associated with the identifier and compare a target PSCell's measurement with reference to this cell's measurement as the criteria to trigger a normal or conditional A3/A5 event (i.e., use the identified cell as an SpCell). If the field is empty, the UE will take the PCell's measurement as the baseline comparison (SpCell) if the RRC message is received from a MN. This may be indicated to the UE for example if the RRC message is received via SRB1. If the field is empty, UE will take a PSCell's measurement as the baseline comparison (SpCell) if the RRC message is received from SRB3 or embedded in RRC reconfiguration message. In an MC network with more than one PSCell, UE will take the PSCell from which the RRC reconfiguration message is received as the SpCell.

High level mobility handover can be event triggered based on periodic Layer 3 (L3) measurement reports. Examples of these events are such as A3 and A5. Their conditions and calculating criteria are shown in NR 38.331.

Event A3 and Event A5 conditions comprise entering conditions and leaving conditions. The entering condition may be considered a condition whereby if satisfied, an event will be triggered. For example, for CPC, if the entering condition is satisfied, conditional PSCell change is triggered by a UE. The leaving condition may be considered a condition whereby if satisfied, the triggering of an event will be cancelled. For example, for CPC, if the leaving condition is satisfied, conditional PSCell change will be cancelled by the UE.

In some examples, the entering condition for an A3 Event condition is satisfied when the following inequality is satisfied:

$$Mn + Ofn + Ocn - Hys > Mp + Ofp + Ocp + Off$$

In some examples, the leaving condition for an A3 Event condition is satisfied when the following inequality is satisfied:

$$Mn + Ofn + Ocn + Hys < Mp + Ofp + Ocp + Off$$

In some examples, the entering conditions for an A5 Event condition is satisfied when both of the following inequalities are satisfied:

$$Mp + Hys < Thresh1$$

$$Mn + Ofn + Ocn - Hys > Thresh2$$

In some examples, the leaving condition for an A5 Event condition is satisfied when both of the following inequalities are satisfied:

$$Mp - Hys > Thresh1$$

$$Mn + Ofn + Ocn + Hys < Thresh2$$

The *Mn* parameter is the power measurement result of a target cell, not considering any offsets. In some examples, a target cell may be a target PCell or a target PSCell. The *Ofn* parameter is the measurement object specific offset of the reference signal of the target cell. For example, the *Ofn* parameter is the offset measurement object defined within the measurement object corresponding to the target cell. The Ocn parameter is the cell specific offset of the target cell, defined within the measurement object corresponding to the frequency of the target cell, and set to zero if not configured for the target cell.

The *Mp* parameter is the power measurement result of a special cell (SpCell), not considering any offsets. In some examples, a special cell is a PCell of a MN or a PSCell of a SN. The Ofp parameter is the measurement object specific offset of the SpCell For example, the Ofp parameter is the offset measurement object defined within the measurement object corresponding to the SpCell. The *Ocp* parameter is the cell specific offset of the SpCell, defined within the measurement object corresponding to the SpCell, and is set to zero if not configured for the SpCell.

The *Hys* parameter is the hysteresis parameter for the event. For example, the hysteresis defined within the report configuration for the event. The *Off* parameter is the offset parameter for the event. For example, an A3 Offset may be defined within a report configuration for an A3 Event.

The *Mn* and *Mp* parameters may be expressed in dBm in case of Reference Signal Received Power (RSRP), or in dB in case of Reference Signal Received Quality (RSRQ) and Reference Signal Signal-to-Noise and Interference Ratio (RS-SINR). The *Ofn, Ocn, Ofp, Ocp, Hys* and Off parameters may be expressed in dB.

The *Thresh1* parameter is a threshold parameter for the event. For example, an A5 Threshold1 may be defined within a report configuration for an A5 Event. The *Thresh1* parameter is expressed in the same unit as the *Mp* parameter. In some examples, the *Mp* parameter may be expressed in dBm in case of Reference Signal Received Power (RSRP), or in dB in case of Reference Signal Received Quality (RSRQ) and Reference Signal Signal-to-Noise and Interference Ratio (RS-SINR).

The *Thresh2* parameter is the threshold parameter for the event. For example, an A5 Threshold2 may be defined within a report configuration for an A5 Event. The *Thresh2* parameter is expressed in the same unit as the *Mn* parameter. In some examples, the *Mn* parameter may be expressed in dBm in case of Reference Signal Received Power (RSRP), or in dB in case of Reference Signal Received Quality (RSRQ) and Reference Signal Signal-to-Noise and Interference Ratio (RS-SINR).

In some examples, the definition of an Event A3 condition also applies to a Conditional Event A3 condition. In some examples, the definition of an Event A5 condition also applies to a Conditional Event A5 condition.

In some examples, the measurement report triggering conditions for CPC are CPC execution conditions. CPC execution conditions may comprise Event A3 conditions and/or Event A5 conditions. If the CPC execution condition comprises an A3 Event condition, using the A3 entering and leaving conditions as defined above, the UE will determine whether a power measurement result of a target PSCell is greater by a first predetermined value than a power measurement result of the SpCell (i.e., the A3 entering condition) and/or determine whether a power measurement result of the target PSCell is lesser by a second predetermined value than a power measurement result of the special cell (i.e., the A3 leaving condition). If the CPC execution condition comprises an A5 Event condition, using the A5 entering and leaving conditions as defined above, the UE will determine whether a power measurement result of the SpCell is lesser than a first threshold value and that a power measurement result of the target PSCell is greater than a second threshold value (i.e., A5 entering condition) and/or determine whether a power measurement result of the SpCell is greater than a third threshold value and that a power measurement result of a target PSCell is lesser than a fourth threshold value (i.e., A5 leaving condition). The SpCell may be a PCell of a MN or a PSCell of a SN.

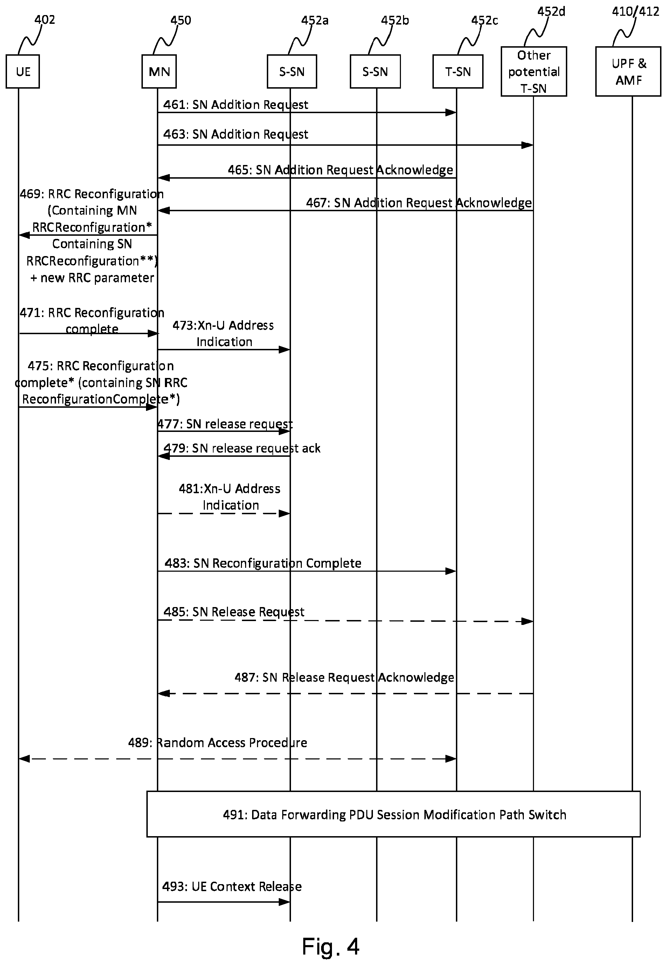

Figure 4 shows an example message flow between a UE 402, MN 450, Source Secondary Node (S-SN) 452a, S-SN 452b, Target Secondary Node (T-SN) 452c, a further potential T-SN 452d, UPF 410 and AMF 412. The method of Figure 4 may be performed in a MC network. Similar principles as those shown in Figure 4 may be applied in a DC network. A MC network may comprise a DC network.

At 461, MN 450 may send a message to T-SN 452c. The message may comprise a request to add T-SN 452c to the MC network of MN 450. T-SN 452c may prepare a PSCell of T-SN 452c with CPC.

At 463, MN 450 may send an SN addition request to a further T-SN 452d. The message may comprise a request to add T-SN 452d to the MC network of MN 450. T-SN 452d may prepare a PSCell of T-SN 452d with CPC.

At 465, T-SN 452c sends an acknowledgement message to MN 450, in response to the message sent at 461. 465 may occur before or after 463. In some examples, the SN Addition Request Acknowledge message sent at 465 provides MN 450 with information of the T-SN 452c PSCells prepared with CPC and a CPC configuration. In some examples, the configuration can be used by UE 402 to change its association from a PSCell of an S-SN to a PSCell of T-SN 452c prepared with CPC. The message may also comprise CPC execution conditions.

At 467, T-SN 452d sends an acknowledgement message to MN 450, in response to the message sent at 463. 457 may occur before or after 465. In some examples, the SN Addition Request Acknowledge message sent at 467 provides MN 450 with information of the T-SN 452d PSCells prepared with CPC and a CPC configuration. In some examples, the configuration can be used by UE 402 to change its association from a PSCell of an S-SN to a PSCell of T-SN 452d prepared with CPC. The message may also comprise CPC execution conditions.

At 469, MN 450 sends a message to UE 402. According to some examples, the message may comprise an RRC message. According to some examples, the message may comprise an RRC Reconfiguration message. The message sent at 469 may comprise at least one of: an RRC reconfiguration of MN 450 (MN RRCReconfiguration*), and SN RRCReconfiguration** comprising T-SN 452c RRC reconfiguration and T-SN 452d RRC reconfiguration.

The message sent at 469 may comprise the IE described herein indicating that either: a PCell connected to MN 450 should be used as a special cell for determining a cell change execution condition for a target primary secondary cell; or PSCell connected to one of T-SN 452c, T-SN 452d (or any other T-SN not shown in figure 4) and identified by an identifier (e.g. PCI) in the IE should be used as the special cell for determining the cell change execution condition for the target primary secondary cell. UE 402 may then use the cell indicated in the IE as a SpCell. In some examples the SpCell may be used for determining A3 or A5 events.

At 471, UE 402 applies the RRC reconfiguration received at 469 and stores the CPC configuration. UE 402 sends a message to MN 450 indicating that RRC reconfiguration is complete based on the information received at 469. The RRC reconfiguration may comprise setting a cell indicated in the IE of 469 as an SpCell.

Upon receiving the message from the UE at 471, at 473 MN 450 informs S-SN 452a that the CPC has been configured via Xn-U Address Indication procedure, S-SN 452a may then, if applicable, together with the Early Status Transfer procedure, start early data forwarding.

At 475, UE 402 starts evaluating the execution conditions. If the execution condition of one candidate PSCell is satisfied, the UE applies RRCReconfiguration* message corresponding to the selected candidate PSCell, and sends an MN RRCReconfigurationComplete* message, including an NR RRCReconfigurationComplete** message for the selected candidate PSCell, and information enabling the MN to identify the SN of the selected candidate PSCell of either T-SN 452c or T-SN(s) 452d. In this example a candidate PSCell of T-SN 452c is selected.

At 477, MN 405 triggers the MN initiated SN Release procedure to inform S-SN 452a to stop providing user data to UE 402. At 479, S-SN 452a acknowledges the release instruction. At 481, MN 405 may send an Xn-U Address indication to S-SN 452a.

At 483, if the RRC connection reconfiguration procedure was successful, MN 405 informs T-SN 452c of the selected candidate PSCell via SN Reconfiguration Complete message, including the SN RRCReconfigurationComplete** message. At 485, MN 405 may then send the SN Release Request message(s) to cancel CPC in the other candidate T-SN(s) 452d, if configured. The other candidate T-SN(s) 452d may acknowledge the release request at 487.

At 489, UE 402 synchronises to the PSCell indicated in the RRCReconfiguration* message applied in 469.

At 491, data forwarding, PDU Session Modification and Path Switch are performed between MN 450, S-SN 452a, S-SN452b, T-SN 452c, T-SN(s) 452d, UPF 410 and AMF 412.

At 493, upon reception of a UE Context Release message from MN 450, S-SN 452a releases radio and control plane related resources associated to the UE context. Any ongoing data forwarding may continue.

The IE received in the message sent at 469 (in some examples, comprising a measConfig IE) may include at least one of the following parameters:

- Measurement objects: A list of objects on which the UE 402 shall perform the measurements.
- Reporting configurations: A list of reporting configurations where there can be one or multiple reporting configurations per measurement object.
- Measurement identities: For measurement reporting, a list of measurement identities where each measurement identity links one measurement object with one reporting configuration.
- Quantity configurations: The quantity configuration defines the measurement filtering configuration used for all event evaluation and related reporting, and for periodical reporting of that measurement.
- Measurement gaps: Periods that the UE 402 may use to perform measurements.

The SpCell indication disclosed herein for an MN initiated inter-SN scenario can be included in a ReportConfigNR sent from MN 450 to UE 402. This is because each report configuration is associated with a triggering event. This can then distinguish reports that are associated with this scenario and other purposes. For example, a ReportConfigNR could be configured with an A3 event or and A5 event. In some examples, a first ReportConfigNR is configured with an A3 event and a second, different ReportConfigNR is configured with an A5 event.

The message sent at 469 may comprise both a measConfig IE and a ReportConfigNR IE according to some examples. According to some examples the message sent at 469 comprises an RRC reconfig message.

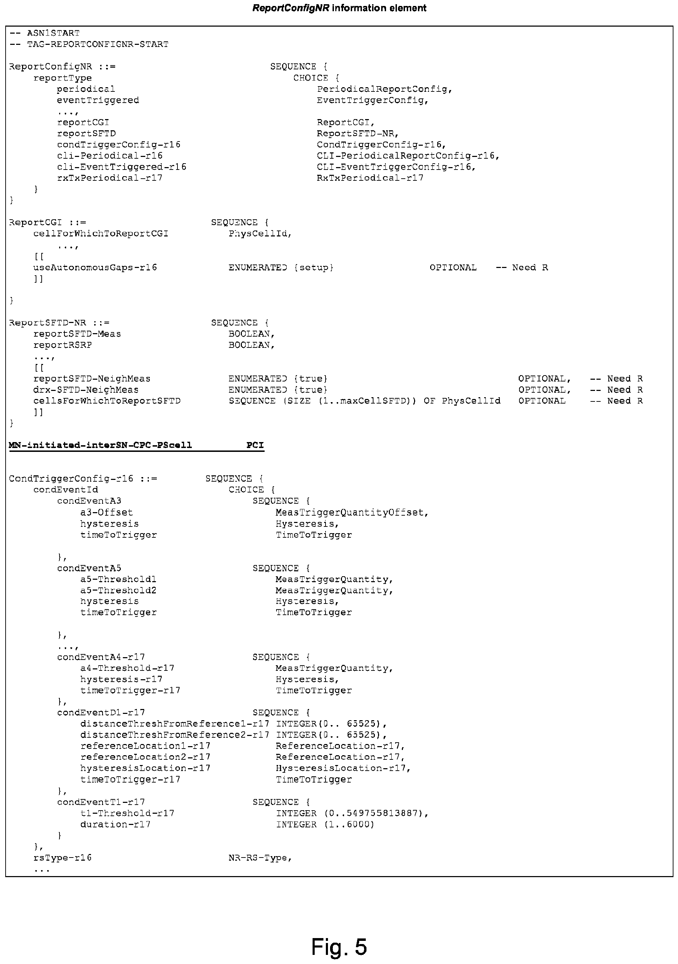

A ReportConfigNR comprising the indication is shown in Figure 5. As shown in bold and underlined, an MN-initiated-interSN-CPC-PSCell ID is used to indicate the cell ID (PCI) of the SpCell in the triggered normal or conditional A3/A5 event for L3 mobility. If this field is empty, UE 402 will use MN 450 PCell's measurement as the baseline comparison (an SpCell) for normal or conditional A3/A5 event, when this RRC config is received via SRB1, and UE 402 will use PSCell's measurement as baseline comparison (an SpCell) for normal or conditional A3/A5 event when this RRC config is received via SRB3 or embedded in RRC reconfiguration message. In an MC network with more than one PSCell, UE will take the PSCell which intitated the RC reconfiguration message as the SpCell.

If this field is not empty, UE 402 will use the measurement object associated with the identifier (cell ID (e.g., PCI)) indicated in this field, The corresponding measurement result will be used as the baseline comparison for normal or conditional A3/A5 event. This can be extended in any complicated scenario in the future when the cell ID of the measurement object which is used as the baseline comparison for normal or conditional A3/A5 event need to be specified.

Herein, PCI is a unique identifier of the cell. UE 402 would match the PCI indicated in field of the ReportConfigNR IE with a PCI in the measurement object of the measConfig IE and make use of the corresponding result. This can be used in DC and MC networks to provide more clarity for the execution criteria in the A3/A5 events. Signalling overhead is reduced between UE and network for indicating to a UE which cells need to be compared for cell change conditions.

According to some examples, UE 402 may send a message to MN 450 indicating compatibility to interpret the IE indicating that a PCell or PSCell should be used as an SpCell before MN 450 sends the IE.

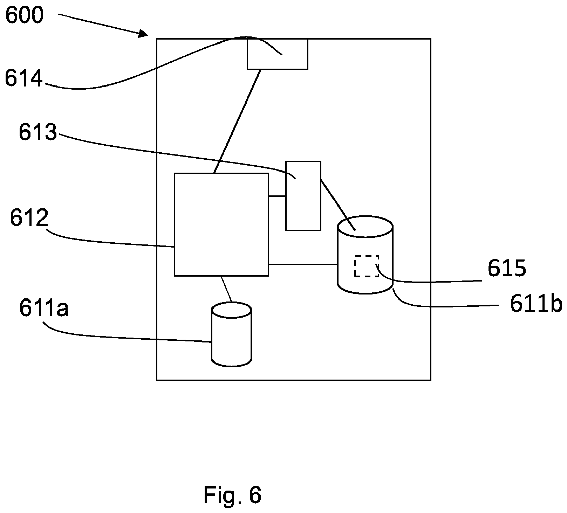

Figure 6 illustrates an example of a control apparatus 600 for controlling a function of the 5GRAN or the 5GC as illustrated on Figure 1. The control apparatus may comprise at least one random access memory (RAM) 611a, at least on read only memory (ROM) 611b, at least one processor 612, 613 and an input/output interface 614. The at least one processor 612, 613 may be coupled to the RAM 611a and the ROM 611b. The at least one processor 612, 613 may be configured to execute an appropriate software code 615. The software code 615 may for example allow to perform one or more steps to perform one or more of the present aspects. The software code 615 may be stored in the ROM 611b. The control apparatus 600 may be interconnected with another control apparatus 600 controlling another function of the 5GRAN or the 5GC. In some embodiments, each function of the 5GRAN or the 5GC comprises a control apparatus 600. In alternative embodiments, two or more functions of the 5GRAN or the 5GC may share a control apparatus.

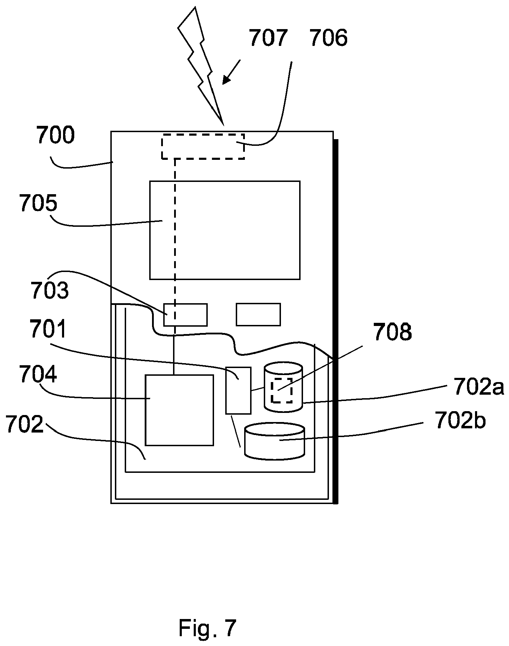

Figure 7 illustrates an example of a terminal 700, such as the terminal illustrated on Figure 1. The terminal 700 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 700 may provide, for example, communication of data for carrying communications. The communications may be one or more of voice, electronic mail (email), text message, multimedia, data, machine data and so on.

The terminal 700 may receive signals over an air or radio interface 707 via appropriate apparatus for receiving and may transmit signals via appropriate apparatus for transmitting radio signals. In Figure 7 transceiver apparatus is designated schematically by block 706. The transceiver apparatus 706 may be provided for example by means of a radio part and associated antenna arrangement. The antenna arrangement may be arranged internally or externally to the mobile device.

The terminal 700 may be provided with at least one processor 701, at least one memory ROM 702a, at least one RAM 702b and other possible components 703 for use in software and hardware aided execution of tasks it is designed to perform, including control of access to and communications with access systems and other communication devices. The at least one processor 701 is coupled to the RAM 702b and the ROM 702a. The at least one processor 701 may be configured to execute an appropriate software code 708. The software code 708 may for example allow to perform one or more of the present aspects. The software code 708 may be stored in the ROM 702a.

The processor, storage and other relevant control apparatus can be provided on an appropriate circuit board and/or in chipsets. This feature is denoted by reference 704. The device may optionally have a user interface such as key pad 705, touch sensitive screen or pad, combinations thereof or the like. Optionally one or more of a display, a speaker and a microphone may be provided depending on the type of the device.

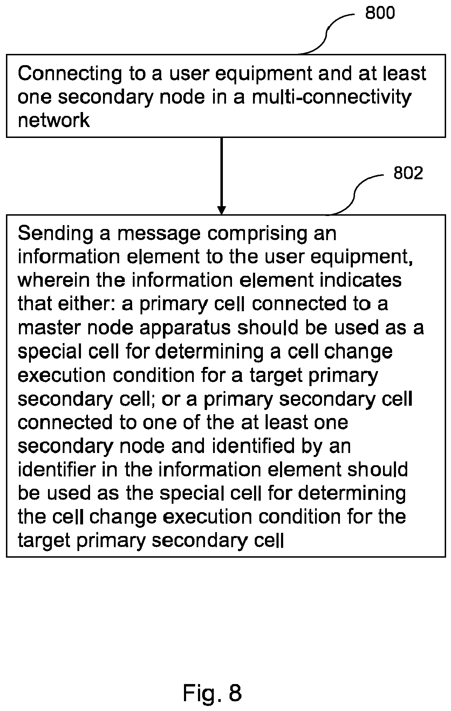

Figure 8 shows an example method flow. In some examples, the method of Figure 8 may be performed by a MN apparatus, such as MN 450, for example.

At 800, the method comprises connecting to a user equipment and one or more secondary nodes in a MC network. The MN apparatus, UE and one or more secondary nodes may be a part of the MC network.

At 802, the method comprises sending a message comprising an information element to the user equipment. The information element may indicates that either: a primary cell connected to a master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

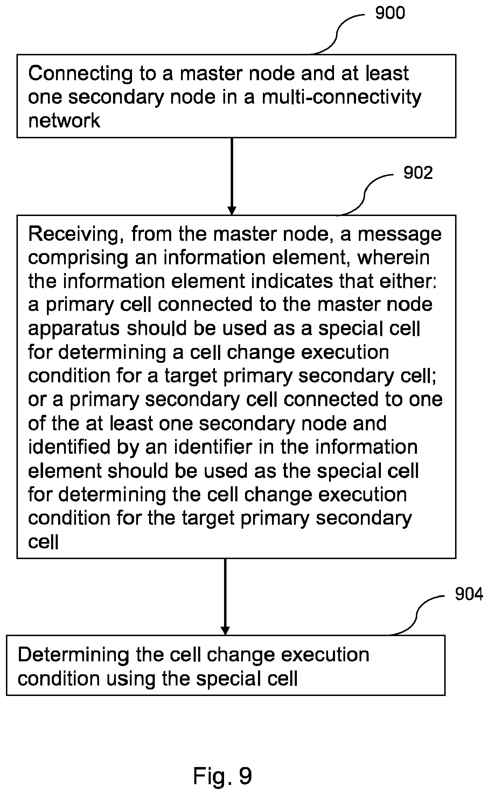

Figure 9 shows an example method flow. In some examples, the method of Figure 9 may be performed by a UE, such as UE 402, for example.

At 900, the method comprises to a master node and at least one secondary node. Both the master node and at least one secondary node may be in a multi-connectivity network, as well as a UE performing the method of Figure 9.

At 902, the method comprises receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell.

At 904, the method comprises determining the cell change execution condition using the special cell.

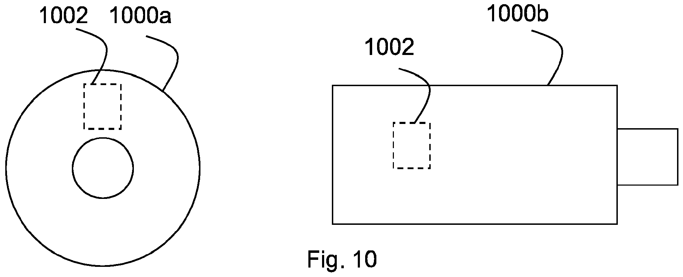

Figure 10 shows a schematic representation of non-volatile memory media 1000a (e.g. computer disc (CD) or digital versatile disc (DVD)) and 1000b (e.g. universal serial bus (USB) memory stick) storing instructions and/or parameters 1002 which when executed by a processor allow the processor to perform one or more of the steps of the above-described methods.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

**Claims**

1.  A master node apparatus comprising:

    means for connecting to a user equipment and at least one secondary node in a multi-connectivity network;
    means for sending a message comprising an information element to the user equipment, wherein the information element indicates whether:

    a primary cell connected to the master node apparatus should be used as a special cell for determining a cell change execution condition for a target primary secondary cell; or
    a primary secondary cell connected to one of the at least one secondary node and identified by an identifier in the information element should be used as the special cell for determining the cell change execution condition for the target primary secondary cell.

2.  A master node apparatus according to claim 1, wherein the multi-connectivity network comprises a dual connectivity network.

3.  A master node apparatus according to claim 1 or claim 2, wherein the information element indicates that the primary cell connected to the master node apparatus should be used as a special cell for determining the cell change execution condition for the target primary secondary cell when the information element is empty.

4.  A master node apparatus according to any preceding claim, wherein the identifier comprises a physical cell identifier.

5.  A master node apparatus according to any preceding claim, wherein the means for sending the message comprising the information element sends the information when capability signalling has been received from the user equipment.

6.  A master node apparatus according to any preceding claim, wherein the cell change execution condition comprises an A3 event condition or an A5 event condition.

7.  A master node apparatus according to any preceding claim, wherein the message comprises a Radio Resource Configuration reconfiguration message.

8.  A method performed by a master node apparatus, the method comprising:

    connecting to a user equipment and at least one secondary node in a multi-connectivity network;
    sending a message comprising an information element to the user equipment, wherein the information element indicates whether:

    a primary cell connected to the master node apparatus should be used as a special cell for determining a cell change execution condition for a target primary secondary cell; or
    a primary secondary cell connected to one of the at least one secondary node and identified by an identifier in the information element should be used as the special cell for determining the cell change execution condition for the target primary secondary cell.

9.  A computer program comprising instructions stored thereon for performing at least the following:

    connecting a master node to a user equipment and at least one secondary node in a multi-connectivity network;
    sending, from a master node, a message comprising an information element to the user equipment, wherein the information element indicates whether:

    a primary cell connected to the master node should be used as a special cell for determining a cell change execution condition for a target primary secondary cell; or
    a primary secondary cell connected to one of the at least one secondary node and identified by an identifier in the information element should be used as the special cell for determining the cell change execution condition for the target primary secondary cell

10. An apparatus comprising:

means for connecting to a master node and at least one secondary node in a multi-connectivity network;
means for receiving, from the master node, a message comprising an information element, wherein the information element indicates whether:

a primary cell connected to the master node should be used as a special cell for determining a cell change execution condition for a target primary secondary cell; or
a primary secondary cell connected to one of the at least one secondary node and identified by an identifier in the information element should be used as the special cell for determining the cell change execution condition for the target primary secondary cell; and wherein the apparatus comprises:

means for determining the cell change execution condition using the special cell.

11. A method comprising:

connecting to a master node and at least one secondary node in a multi-connectivity network;
receiving, from the master node, a message comprising an information element, wherein the information element indicates whether:

a primary cell connected to the master node should be used as a special cell for determining a cell change execution condition for a target primary secondary cell; or
a primary secondary cell connected to one of the at least one secondary node and identified by an identifier in the information element should be used as the special cell for determining the cell change execution condition for the target primary secondary cell; and wherein the method comprises:
determining the cell change execution condition using the special cell.

12. A computer program comprising instructions stored thereon for performing at least the following:

connecting to a master node and at least one secondary node in a multi-connectivity network;
receiving, from the master node, a message comprising an information element, wherein the information element indicates whether:

a primary cell connected to the master node should be used as a special cell for determining a cell change execution condition for a target primary secondary cell; or
a primary secondary cell connected to one of the at least one secondary node and identified by an identifier in the information element should be used as the special cell for determining the cell change execution condition for the target primary secondary cell; and wherein the method comprises:
determining the cell change execution condition using the special cell.

Fig. 1

200

250

252

MCG

Dual Connectivity

SCG

PCell

SCell

SCell

PSCell

SCell

SCell

254

256a

256b

258

260a

260b

Fig. 2

300

Candidate PSCells — 358b

352d

350

352c

SN

352b

SN

MN

SN

SN

352a

Active Serving PSCells

358a

Fig. 3

Fig. 4

**ReportConfigNR** information element

```
-- ASN1START
-- TAG-REPORTCONFIGNR-START

ReportConfigNR ::=                      SEQUENCE {
    reportType                              CHOICE {
        periodical                              PeriodicalReportConfig,
        eventTriggered                          EventTriggerConfig,
        ...,
        reportCGI                               ReportCGI,
        reportSFTD                              ReportSFTD-NR,
        condTriggerConfig-r16                   CondTriggerConfig-r16,
        cli-Periodical-r16                      CLI-PeriodicalReportConfig-r16,
        cli-EventTriggered-r16                  CLI-EventTriggerConfig-r16,
        rxTxPeriodical-r17                      RxTxPeriodical-r17
    }
}

ReportCGI ::=                   SEQUENCE {
    cellForWhichToReportCGI         PhysCellId,
        ...,
    [[
    useAutonomousGaps-r16           ENUMERATED {setup}                OPTIONAL    -- Need R
    ]]
}

ReportSFTD-NR ::=               SEQUENCE {
    reportSFTD-Meas                 BOOLEAN,
    reportRSRP                      BOOLEAN,
        ...,
    [[
    reportSFTD-NeighMeas            ENUMERATED {true}                              OPTIONAL,   -- Need R
    drx-SFTD-NeighMeas              ENUMERATED {true}                              OPTIONAL,   -- Need R
    cellsForWhichToReportSFTD       SEQUENCE (SIZE (1..maxCellSFTD)) OF PhysCellId OPTIONAL    -- Need R
    ]]
}

MN-initiated-interSN-CPC-PScell           PCI


CondTriggerConfig-r16 ::=       SEQUENCE {
    condEventId                     CHOICE {
        condEventA3                     SEQUENCE {
            a3-Offset                       MeasTriggerQuantityOffset,
            hysteresis                      Hysteresis,
            timeToTrigger                   TimeToTrigger

        },
        condEventA5                     SEQUENCE {
            a5-Threshold1                   MeasTriggerQuantity,
            a5-Threshold2                   MeasTriggerQuantity,
            hysteresis                      Hysteresis,
            timeToTrigger                   TimeToTrigger

        },
        ...,
        condEventA4-r17                 SEQUENCE {
            a4-Threshold-r17                MeasTriggerQuantity,
            hysteresis-r17                  Hysteresis,
            timeToTrigger-r17               TimeToTrigger
        },
        condEventD1-r17                 SEQUENCE {
            distanceThreshFromReference1-r17 INTEGER(0.. 65525),
            distanceThreshFromReference2-r17 INTEGER(0.. 65525),
            referenceLocation1-r17          ReferenceLocation-r17,
            referenceLocation2-r17          ReferenceLocation-r17,
            hysteresisLocation-r17          HysteresisLocation-r17,
            timeToTrigger-r17               TimeToTrigger
        },
        condEventT1-r17                 SEQUENCE {
            t1-Threshold-r17                INTEGER (0..549755813887),
            duration-r17                    INTEGER (1..6000)
        }
    },
    rsType-r16                      NR-RS-Type,
    ...
```

Fig. 5

Fig. 6

700

707   706

705

703

701

704

702

708

702a

702b

Fig. 7

800

Connecting to a user equipment and at least one secondary node in a multi-connectivity network

802

Sending a message comprising an information element to the user equipment, wherein the information element indicates that either: a primary cell connected to a master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell

Fig. 8

900

Connecting to a master node and at least one secondary node in a multi-connectivity network

902

Receiving, from the master node, a message comprising an information element, wherein the information element indicates that either: a primary cell connected to the master node apparatus should be used as a special cell for determining a cell change execution condition for a target primary secondary cell; or a primary secondary cell connected to one of the at least one secondary node and identified by an identifier in the information element should be used as the special cell for determining the cell change execution condition for the target primary secondary cell

904

Determining the cell change execution condition using the special cell

Fig. 9

1002   1000a

1000b

1002

Fig. 10

Europäisches Patentamt
European Patent Office
Office européen des brevets

**EUROPEAN SEARCH REPORT**

Application Number

EP 24 15 4664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/240334 A1 (ERICSSON TELEFON AB L M [SE]) 17 November 2022 (2022-11-17) | 1-4,6-12 | INV. H04W36/00 |
| Y | * page 1, line 7 - line 29; figure 1 * <br>* page 19, line 12 - page 28, line 20 * | 5 | |
| Y | US 2021/099926 A1 (CHEN HUNG-CHEN [TW] ET AL) 1 April 2021 (2021-04-01) | 5 | |
| A | * paragraph [0110] - paragraph [0119] * <br>* paragraph [0181] - paragraph [0189]; figure 8 * | 1-4,6-12 | |
| A | WO 2022/086389 A1 (ERICSSON TELEFON AB L M [SE]) 28 April 2022 (2022-04-28) <br>* paragraph [0114] - paragraph [0192] * | 1-12 | |
| A | WO 2021/251625 A1 (LG ELECTRONICS INC [KR]) 16 December 2021 (2021-12-16) <br>* page 11, line 12 - page 16, line 2 * | 1-12 | |

TECHNICAL FIELDS SEARCHED (IPC)

H04W

The present search report has been drawn up for all claims

| Place of search | Date of completion of the search | Examiner |
|---|---|---|
| Munich | 19 June 2024 | Vadursi, Michele |

## ANNEX TO THE EUROPEAN SEARCH REPORT
## ON EUROPEAN PATENT APPLICATION NO.

EP 24 15 4664

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2024

| Patent document cited in search report | Publication date | Patent family member(s) | | Publication date |
|---|---|---|---|---|
| WO 2022240334 A1 | 17-11-2022 | NONE | | |
| US 2021099926 A1 | 01-04-2021 | CN | 114503666 A | 13-05-2022 |
| | | CN | 117241327 A | 15-12-2023 |
| | | EP | 4026366 A1 | 13-07-2022 |
| | | US | 2021099926 A1 | 01-04-2021 |
| | | US | 2023079794 A1 | 16-03-2023 |
| | | WO | 2021057885 A1 | 01-04-2021 |
| WO 2022086389 A1 | 28-04-2022 | NONE | | |
| WO 2021251625 A1 | 16-12-2021 | KR | 20230022841 A | 16-02-2023 |
| | | US | 2023239751 A1 | 27-07-2023 |
| | | WO | 2021251625 A1 | 16-12-2021 |

EPO FORM P0459

For more details about this annex : see Official Journal of the European Patent Office, No. 12/82